# EUROPÄISCHE PATENTSCHRIFT

(11) **EP 4 146 948 B1**
(45) Veröffentlichungstag und Bekanntmachung des Hinweises auf die Patenterteilung: **08.05.2024**
(21) Anmeldenummer: 21717348.3
(22) Anmeldetag: 31.03.2021
(51) Int. Cl.: F16C 17/03

(54) **KIPPSEGMENTLAGER**
TILTING PAD BEARING
PALIER À PATINS OSCILLANTS

(30) Priorität: 07.05.2020 DE 102020205769
(43) Veröffentlichungstag der Anmeldung: 15.03.2023
(73) Patentinhaber: Robert Bosch GmbH, 70442 Stuttgart (DE)
(72) Erfinder: SCHUELKE, Armin, 71134 Aidlingen (DE); LANG, Thomas, 70839 Gerlingen (DE)
(86) Internationale Anmeldenummer: PCT/EP2021/058413
(87) Internationale Veröffentlichungsnummer: WO 2021/223943

(56) Entgegenhaltungen:
- EP-A1- 0 758 058
- DE-A1-102016 216 395
- GB-A- 1 174 429
- JP-U- S57 145 816

## Beschreibung

Die Erfindung betrifft ein Kippsegmentlager mit Kippsegmenten, die mit einer rahmenartigen Federeinrichtung in einem Gehäusekörper kippbar positioniert und gehalten sind, um im Betrieb des Kippsegmentlagers konvergierende Lagerspalte zwischen den Kippsegmenten und einem um eine Drehachse drehbar gelagerten Rotorkörper zu erzeugen.

### Stand der Technik

Aus der deutschen Offenlegungsschrift DE 10 2016 216 395 A1 ist ein Kippsegmentlager bekannt, aufweisend: Eine Hülse, mehrere Kippsegmente, und einen Rahmen, in welchem die Kippsegmente aufgenommen sind, wobei jeweils ein Federelement zwischen der Innenseite der Hülse und dem zugeordneten Kippsegment vorgesehen ist, wobei das Federelement mit dem Rahmen verbunden oder als separates Bauteil zwischen der Innenseite der Hülse und dem Rahmen angeordnet ist, wobei der Rahmen wenigstens einen Halterungsabschnitt aufweist zum Halten des zugeordneten Kippsegments in dem Rahmen, wobei das jeweilige Kippsegment derart durch den wenigstens einen Halterungsabschnitt in dem Rahmen gehalten wird, dass das Kippsegment ein Spiel in radialer Richtung und vorzugsweise zusätzlich in Umfangsrichtung aufweist, um ein Kippen des Kippsegments in Umfangsrichtung zu erlauben.

Aus der EP0758058 A1 ist ein Kippsegmentlager mit den Merkmalen des Oberbegriffs des beiliegenden Anspruchs 1 bekannt.

### Offenbarung der Erfindung

Aufgabe der Erfindung ist es, ein Kippsegmentlager mit Kippsegmenten, die mit einer rahmenartigen Federeinrichtung in einem Gehäusekörper kippbar positioniert und gehalten sind, um im Betrieb des Kippsegmentlagers konvergierende Lagerspalte zwischen den Kippsegmenten und einem um eine Drehachse drehbar gelagerten Rotorkörper zu erzeugen, funktionell und/oder herstellungstechnisch zu verbessern.

Die Aufgabe ist bei einem Kippsegmentlager mit Kippsegmenten, die mit einer rahmenartigen Federeinrichtung in einem Gehäusekörper kippbar positioniert und gehalten sind, um im Betrieb des Kippsegmentlagers konvergierende Lagerspalte zwischen den Kippsegmenten und einem um eine Drehachse drehbar gelagerten Rotorkörper zu erzeugen, durch Wälzkörper gelöst, die zwischen dem Gehäusekörper und den Kippsegmenten angeordnet sind. Bei dem Rotorkörper handelt es sich zum Beispiel um einen Wellenabschnitt einer Welle. In vielen Bereichen der Technik müssen schnelldrehende Wellen gelagert werden. Solche Wellen werden beispielsweise in Turboverdichtern benötigt, wie sie insbesondere zur Verdichtung von Luft für aufgeladene Verbrennungsmotoren oder für Brennstoffzellensysteme Verwendung finden. Dabei sind auf, in oder an der Welle in der Regel weitere Bauteile montiert, beispielsweise Turbinenräder, Verdichterräder oder Magnete für elektrische Antriebe. Diese drehen sich ebenfalls mit sehr hoher Geschwindigkeit. Die Wellen können einteilig oder mehrteilig ausgeführt sein. Die Welle wird vorzugsweise durch mehrere Lagereinheiten gelagert, zum Beispiel zwei Radiallager und ein Axiallager. Die Lagereinheiten ermöglichen ein möglichst verlustarmes Rotieren, wenn im Betrieb Kräfte und Momente auf die Welle wirken. Zur Lagerung werden vorteilhaft gasgeschmierte Lager verwendet, da diese bei sehr hohen Umdrehungsgeschwindigkeiten sehr geringe Reibung und damit nur wenig Lagerverluste aufweisen. Darüber hinaus kann bei einem gasgeschmierten Lager eine Öl- oder Fettschmierung entfallen. Das ist insbesondere bei Brennstoffzellenanwendungen von Vorteil, da hier die geförderte Verdichterluft ölfrei sein muss, um einen Brennstoffzellenstack nicht zu beschädigen. Das Kippsegmentlager umfasst vorteilhaft mindestens drei Kippsegmente. Besonders bevorzugt umfasst das Kippsegmentlager genau drei Kippsegmente. Bei dem beanspruchten Kippsegmentlager handelt es sich vorzugsweise um ein Radiallager. Die Kippsegmente werden durch die Federeinrichtung relativ zueinander so positioniert und gehalten, dass sie im Betrieb des Kippsegmentlagers auftretende Kippbewegungen ausführen können. Die Kippsegmente sind um einen sogenannten Pivotpunkt beziehungsweise eine Pivotachse oder Kippachse kippbar. Die Wälzkörper dienen vorteilhaft dazu, die Kippbewegungen der Kippsegmente zu ermöglichen. Über die Wälzkörper werden die Kippsegmente in dem Radiallager radial punktuell oder linienförmig abgestützt. Bei den Wälzkörpern handelt es sich besonders vorteilhaft um standardisierte Bauteile, wie Kugeln, Rollen oder Nadeln, die in Wälzlagern zum Einsatz kommen. Diese standardisierten Wälzkörper sind kostengünstig erhältlich.

Ein bevorzugtes Ausführungsbeispiel des Kippsegmentlagers ist dadurch gekennzeichnet, dass die Wälzkörper als Rollen ausgeführt sind. Die Rollen haben vorzugsweise im Wesentlichen die Gestalt von geraden Kreiszylindern, deren Zylinderachsen parallel zu der Drehachse des Rotorkörpers angeordnet sind. Jedem Kippsegment ist vorteilhaft mindestens ein Wälzkörper zugeordnet. Durch die Rollen kann auf einfache Art und Weise eine definierte Kippbewegung der Kippsegmente im Betrieb des Kippsegmentlagers realisiert werden.

Ein weiteres bevorzugtes Ausführungsbeispiel des Kippsegmentlagers ist dadurch gekennzeichnet, dass die Wälzkörper als Kugeln ausgeführt sind. Jedem Kippsegment können mehrere Kugeln zugeordnet sein. Die Kugeln sind dann vorteilhaft parallel zur Drehachse des Rotorkörpers angeordnet. Gemäß einem bevorzugten Ausführungsbeispiel ist jedem Kippsegment genau ein als Kugel ausgeführter Wälzkörper zugeordnet. Das liefert unter anderem den Vorteil, dass das zugeordnete Kippsegment nicht nur um eine Achse parallel zur Drehachse des Rotorkörpers kippen kann, die auch als Wellenachse bezeichnet wird, sondern auch zu einer dazu orthogonalen Achse. So können an sich unerwünschte, aber in der Praxis kaum vermeidbare, Winkelfehlstellungen des Rotorkörpers beziehungsweise der Welle oder einer Gehäusebohrung eines Gehäusekörpers ausgeglichen werden. Bei diesem Ausführungsbeispiel können sich die Kippsegmente vorteilhaft an der Drehachse oder Wellenachse ausrichten.

Das erfindungsgemäße Kippsegmentlager ist durch einen Käfig gekennzeichnet, der dazu dient, die Wälzkörper zwischen dem Gehäusekörper und den Kippsegmenten in Position zu halten. Der Käfig dient gemäß einem Ausführungsbeispiel nur dazu, die Wälzkörper zwischen dem Gehäusekörper und den Kippsegmenten in Position zu halten. Das liefert den Vorteil, dass der Käfig relativ einfach ausgeführt und somit kostengünstig herstellbar sein kann. Durch den Käfig wird eine Vormontage der Wälzkörper ermöglicht. Der Käfig umfasst zum Beispiel mindestens einen Ringkörper. Der Ringkörper braucht zur Aufnahme der Wälzkörper nur jeweils ein Durchgangsloch pro Wälzkörper aufzuweisen. Je nach Ausführung ist auch die Federeinrichtung mit einem entsprechenden Durchgangsloch ausgestattet. Die Durchgangslöcher dienen zum einen zur Positionierung der Wälzkörper. Darüber hinaus ermöglichen die Durchgangslöcher, dass die Wälzkörper sowohl Kontakt mit dem Rotorkörper als auch Kontakt mit dem Gehäusekörper haben. Bei einem nicht erfindungsgemäßen

Ausführungsbeispiel kann auch nur die Federeinrichtung zum Positionieren der Wälzkörper genutzt werden. Dann kann der Käfig entfallen.

Das erfindungsgemäße Kippsegmentlager ist dadurch gekennzeichnet, dass der Käfig Durchgangslöcher aufweist, in denen die Wälzkörper mit Spiel so aufgenommen sind, dass die Wälzkörper außerhalb der Durchgangslöcher sowohl zu dem Gehäusekörper als auch zu dem jeweiligen Kippsegment Wälzkontakt haben. Je nach Ausführung ist die Federeinrichtung, beziehungsweise ist zumindest ein Teil der Federeinrichtung, noch radial zwischen dem Käfig und dem Rotorkörper beziehungsweise zwischen dem Käfig und dem Gehäusekörper angeordnet. Dann ist die Federeinrichtung an der entsprechenden Stelle vorteilhaft mit einem Durchgangsloch ausgestattet, das koaxial zu dem entsprechenden Durchgangsloch im Käfig ist. Mit dem Käfig können die Wälzkörper auf einfache Art und Weise stabil in ihrer gewünschten Position zwischen dem Rotorkörper und dem Gehäusekörper gehalten werden.

Ein weiteres bevorzugtes Ausführungsbeispiel des Kippsegmentlagers ist dadurch gekennzeichnet, dass der Käfig mindestens einen einfachen Ringkörper umfasst. Der Ringkörper hat zum Beispiel die Gestalt eines Kreisrings mit einem rechteckigen Ringquerschnitt. Dadurch wird die Herstellung des Ringkörpers vereinfacht. Die Gestalt der Durchgangslöcher in dem Ringkörper ist vorteilhaft im Wesentlichen an die Gestalt der Wälzkörper angepasst. Der Käfig kann auch zwei Ringkörper umfassen. Je nach Ausführung können die Ringkörper auch durch Stege miteinander verbunden sein.

Ein weiteres bevorzugtes Ausführungsbeispiel des Kippsegmentlagers ist dadurch gekennzeichnet, dass den Kippsegmenten jeweils ein Federelement zugeordnet ist, um das zugeordnete Kippsegment in dem Gehäusekörper kippbar zu positionieren und zu halten. Die Federeinrichtung umfasst bei diesem Ausführungsbeispiel vorteilhaft genau ein Federelement pro Kippsegment. Dadurch wird die Herstellung der Federeinrichtung vereinfacht. Die Federelemente umfassen an ihren in Umfangsrichtung entgegengesetzten Enden vorteilhaft jeweils einen Halteabschnitt, mit dem das jeweilige Federelement das zugeordnete Kippsegment umgreift. Gemäß einem weiteren Ausführungsbeispiel beziehungsweise einem weiteren Merkmal dient der Käfig, und zwar sowohl in seiner einteiligen Ausführung mit nur einem Ringkörper als auch in seiner zweiteiligen Ausführung mit zwei Ringkörpern, vorteilhaft auch dazu, die Federelemente, zumindest in axialer Richtung, in dem Kippsegmentlager zu positionieren.

Ein weiteres bevorzugtes Ausführungsbeispiel des Kippsegmentlagers ist dadurch gekennzeichnet, dass das Federelement das zugeordnete Kippsegment an seinen in Umfangsrichtung entgegengesetzten Enden umgreift. Zu diesem Zweck kann das Federelement an seinen in Umfangrichtung entgegengesetzten Enden genau einen Halteabschnitt aufweisen. Das Federelement kann aber auch mit mehreren Halteabschnitten an seinen entgegengesetzten Enden ausgestattet sein. Daraus ergibt sich mehr Gestaltungsfreiheit bei der Realisierung der Federeinrichtung und/oder des Käfigs.

Ein weiteres bevorzugtes Ausführungsbeispiel des Kippsegmentlagers ist dadurch gekennzeichnet, dass das Federelement mindestens eine nach innen gegen das zugeordnete Kippsegment vorgespannte Federlasche umfasst. Die Federlasche erstreckt sich vorteilhaft durch ein Durchgangsloch, das zu diesem Zweck in dem Käfig vorgesehen ist. Alternativ oder zusätzlich kann das Federelement eine zusätzliche Federlasche aufweisen, die gegen den Gehäusekörper vorgespannt ist. Die Federelemente mit den Federlaschen halten und positionieren die Kippsegmente und spannen diese mit Hilfe der Federlaschen vorteilhaft vor, so dass bei nicht drehendem Rotorkörper die Kippsegmente einseitig gegen den Rotorkörper gedrückt werden.

Die Erfindung betrifft des Weiteren einen Käfig, ein Kippsegment, ein Federelement, einen Gehäusekörper und/oder einen Wälzkörper für ein vorab beschriebenes Kippsegmentlager. Die genannten Teile sind separat handelbar.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

### Kurze Beschreibung der Zeichnung

Es zeigen:
Figur 1 eine perspektivische Darstellung eines Kippsegmentlagers mit drei Kippsegmenten, denen jeweils zwei kugelförmige Wälzkörper zugeordnet sind;
Figur 2 eine ähnliche Darstellung wie in Figur 1, wobei jedem Kippsegment ein kugelförmiger Wälzkörper zugeordnet ist;
Figur 3 eine ähnliche Darstellung wie in Figur 2, wobei jedem Kippsegment ein rollenförmiger Wälzkörper zugeordnet ist;
Figur 4 eine ähnliche Darstellung wie in Figur 3 mit einem Käfig, der nur einen Ringkörper umfasst;
Figur 5 das Kippsegmentlager aus Figur 4 mit einem halbgeschnitten dargestellten Gehäusekörper; und
Figur 6 eine perspektivische Darstellung eines Blechstreifens, der vorteilhaft zur Herstellung eines Käfigs für Wälzkörper eines Kippsegmentlagers genutzt werden kann, wie es in Figur 5 dargestellt ist.

### Beschreibung der Ausführungsbeispiele

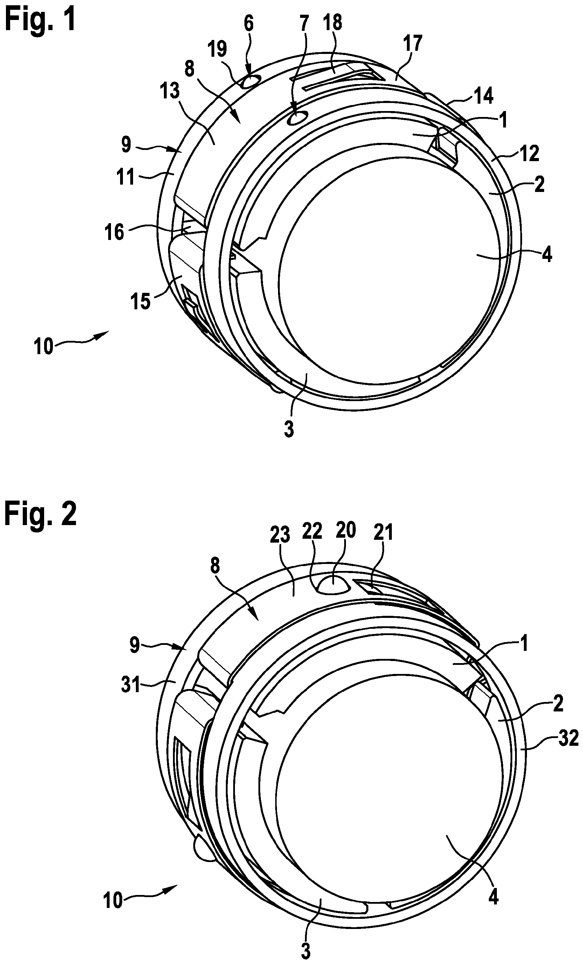

In den Figuren 1 bis 5 ist ein Kippsegmentlager 10 schematisch und perspektivisch in verschiedenen Ausführungsbeispielen dargestellt. Zur Bezeichnung gleicher oder ähnlicher Teile werden in den Figuren 1 bis 5 die gleichen Bezugszeichen verwendet. Zunächst wird auf die Gemeinsamkeiten der einzelnen Ausführungsbeispiele eingegangen. Danach werden die Unterschiede zwischen den einzelnen Ausführungsbeispielen erläutert.

Das Kippsegmentlager 10 ist als Radiallager mit drei Kippsegmenten 1, 2, 3 ausgeführt. Radial innerhalb der Kippsegmente 1, 2, 3 ist ein Rotorkörper 4 um eine Drehachse drehbar gelagert. Bei dem Rotorkörper 4 handelt es sich zum Beispiel um eine Welle oder um einen Wellenabschnitt mit einer Welle.

Die Kippsegmente 1, 2, 3 sind mit Hilfe von Wälzkörpern 6, 7; 20; 24; 44 jeweils um einen Pivotpunkt beziehungsweise eine Kippachse oder Pivotachse kippbar. In Figur 1 sind jedem Kippsegment 1 bis 3 zwei Wälzkörper 6, 7 zugeordnet, die als Kugeln ausgeführt sind. In den Figuren 2 bis 5 ist jedem Kippsegment 1 bis 3 genau ein Wälzkörper 20; 24; 44 zugeordnet. Die Wälzkörper 20 sind als Kugeln ausgeführt. Die Wälzkörper 24; 44 sind als Rollen ausgeführt.

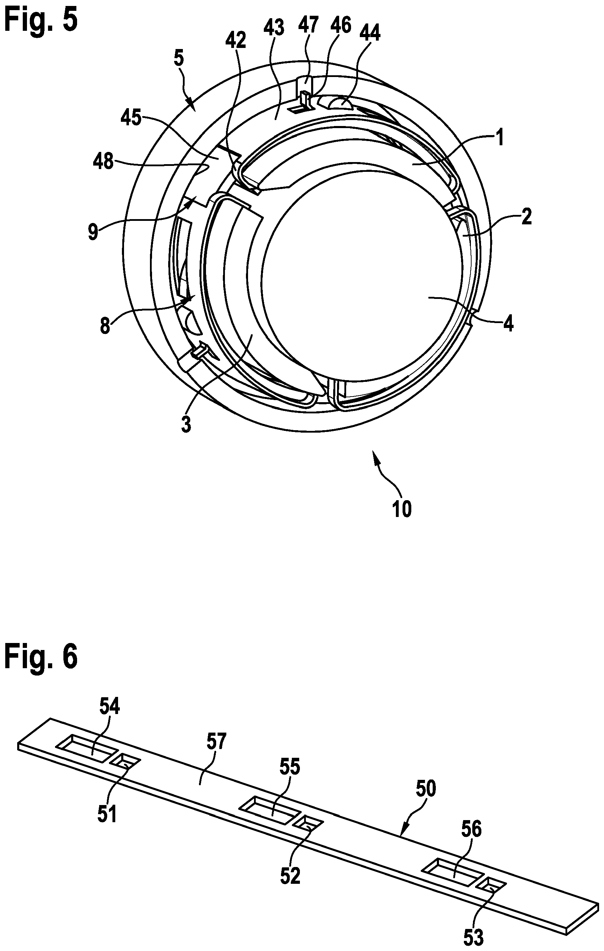

Die Kippsegmente 1 bis 3 werden durch eine Federeinrichtung 8 relativ zueinander und zu dem Rotorkörper 4 innerhalb eines Gehäusekörpers (5 in Figur 5) positioniert und gehalten. Die Federeinrichtung 8 ist mit einem Käfig 9 kombiniert.

In Figur 1 umfasst der Käfig 9 zwei Ringkörper 11, 12. Die Federeinrichtung 8 umfasst drei Federelemente 13, 14, 15. Jedem Federelement 13, 14, 15 ist genau ein Kippsegment 1, 2, 3 zugeordnet.

Die Federelemente 13, 14, 15 sind in axialer Richtung zwischen den beiden Ringkörpern 11, 12 angeordnet. Die Federelemente 13, 14, 15, die Kippsegmente 1, 2, 3 und die Ringkörper 11, 12 sind jeweils gleich ausgeführt. Darüber hinaus sind die vorab genannten Einzelteile konstruktiv einfach aufgebaut und somit kostengünstig herstellbar.

Das Federelement 13 umfasst an seinen in Umfangsrichtung entgegengesetzten Enden jeweils einen Halteabschnitt 16, 17. Mit den Halteabschnitten 16, 17 umgreift das Federelement 13 das zugeordnete Kippsegment 1. In axialer Richtung ist das Federelement 13 zwischen den beiden Ringkörpern 11, 12 positioniert. Darüber hinaus weist das Federelement 13 eine Federlasche 18 auf, die radial nach außen gegen den Gehäusekörper (5 in Figur 5) vorgespannt ist.

Die Ringkörper 11, 12 umfassen jeweils ein Durchgangsloch 19 zur Aufnahme eines als Kugel ausgeführten Wälzkörpers 6, 7. Die Kugel 6 ist mit Spiel in dem Durchgangsloch 19 aufgenommen, das zum Beispiel als Langloch ausgeführt ist.

Die dargestellten Kippsegmente 1 bis 3 haben einen Innendurchmesser und einen Außendurchmesser. Anders als dargestellt, können die Kippsegmente 1 bis 3 auch nahezu beliebige Formen annehmen. Die Kippsegmente 1 bis 3 können, wenn sie zum Beispiel als Ringsegmente ausgeführt sind, kostengünstig durch Auftrennen eines Rings hergestellt werden.

In Figur 2 ist jedem der Kippsegmente 1 bis 3 ein als Kugel ausgeführter Wälzkörper 20 zugeordnet. Ein dem Kippsegment 1 zugeordnetes Federelement 23 umfasst ein Durchgangsloch 22, in welchem die Kugel 20 mit Spiel aufgenommen ist. Das Durchgangsloch 22 ist kreisförmig ausgeführt. Darüber hinaus weist das Federelement 23 eine Federlasche 21 auf, die in Figur 2 radial nach innen gegen den Rotorkörper 4 vorgespannt ist.

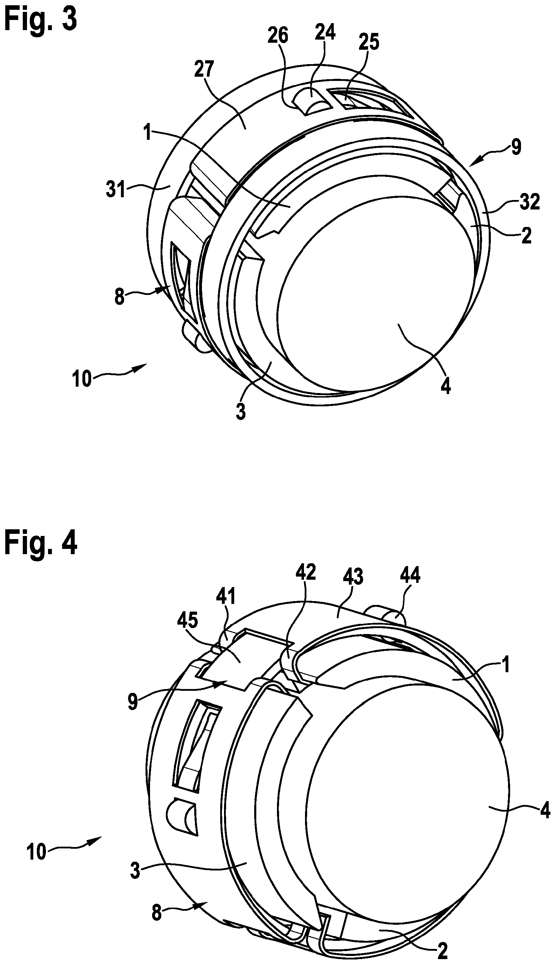

Der Käfig 9 umfasst zwei Ringkörper 31, 32, die bei den in den Figuren 2 und 3 dargestellten Ausführungsbeispielen nur dazu dienen, die Federelemente 23; 27 in axialer Richtung zu positionieren. Die Ringkörper 31, 32 sind im Unterschied zu den Ringkörpern 11, 12 in Figur 1 nicht mit Durchgangslöchern (19 in Figur 1) für die Wälzkörper ausgestattet.

In Figur 3 ist ein als Rolle ausgeführter Wälzkörper 24 in einem Durchgangsloch 26 eines Federelements 27 angeordnet, das dem Kippsegment 1 zugeordnet ist.

Eine Federlasche 25 ist, wie bei dem in Figur 2 dargestellten Ausführungsbeispiel, radial nach innen gegen den Rotorkörper 4 vorgespannt. Die Anordnung der Federlasche 25 in der Nähe des Wälzkörpers 24 liefert unter anderem den Vorteil, dass der Wälzkörper 24 vorteilhaft zur Ausrichtung beziehungsweise zur Positionierung der Federeinrichtung 8 und des Käfigs 9 genutzt wird.

Bei dem in den Figuren 4 und 5 dargestellten Ausführungsbeispiel umfasst der Käfig 9 nur einen Ringkörper 45. Der Ringkörper 45 ist, in axialer Richtung bezogen auf das Kippsegmentlager 10, mittig angeordnet. Die Federelemente 43 sind im Unterschied zu den vorangegangenen Ausführungsbeispielen mit zwei Halteabschnitten 41, 42 an jedem Umfangsende ausgestattet. Mit den Halteabschnitten 41, 42 umgreift das Federelement 43 das Kippsegment 1 an seinem in Figur 1 sichtbaren Umfangsende. Die Halteabschnitte 41, 42 sind axial benachbart zu dem dazwischen angeordneten Ringkörper 45 angeordnet.

In Figur 5 ist das Kippsegmentlager 10 aus Figur 4 zusammen mit einem halbgeschnitten dargestellten Gehäusekörper 5 perspektivisch dargestellt. Der Gehäusekörper 5 umfasst eine Gehäusebohrung 48, in welcher das Kippsegmentlager 10 aufgenommen ist. Von dem Federelement 43 ist eine Positionierlasche 46 radial nach außen abgewinkelt.

Die Positionierlasche 46 greift in ein Durchgangsloch 47, das in dem Gehäusekörper 5 zu diesem Zweck vorgesehen ist. Benachbart zu der Positionierlasche 46 umfasst das Federelement 43 ein nicht bezeichnetes Durchgangsloch für den Wälzkörper 44. Ein entsprechendes Durchgangsloch ist in dem radial zwischen dem Kippsegment 1 und dem Federelement 43 angeordneten Ringkörper 45 für den Wälzkörper 44 vorgesehen.

Die Positionierlasche 46 dient zur Darstellung einer Verdrehsicherung in der Gehäusebohrung 48 des Gehäusekörpers 5. Anders als dargestellt, kann die Positionierlasche 46 auch in eine entsprechende Nut oder Ausnehmung in den Gehäusekörper 5 eingreifen.

In Figur 6 ist gezeigt, wie der Ringkörper (45 in Figur 5) auf einfache Art und Weise kostengünstig aus einem Blechstreifen 57 hergestellt werden kann. Der Blechstreifen 57 umfasst Durchgangslöcher 51 bis 53 und 54 bis 56, die in dem Blechstreifen 57 zum Beispiel durch Stanzen hergestellt werden können. Die Durchgangslöcher 51 bis 53 dienen zur Aufnahme je eines Wälzkörpers (44 in Figur 5).

Die Durchgangslöcher 54 bis 56 dienen zum Durchführen von Federlaschen, die von den Federelementen der Federeinrichtung (8 in Figur 5) ausgehen und gegen den Rotorkörper (4 in Figur 5) vorgespannt sind. Der Blechstreifen 57 mit den Durchgangslöchern 51 bis 56 kann auch als Abwicklung 50 oder als Zwischenprodukt bei der Herstellung des Ringkörpers (45 in Figur 5) betrachtet werden.

## Patentansprüche

1. Kippsegmentlager (10) mit Kippsegmenten (1,2,3), die mit einer rahmenartigen Federeinrichtung (8) in einem Gehäusekörper (5) kippbar positioniert und gehalten sind, um im Betrieb des Kippsegmentlagers (10) konvergierende Lagerspalte zwischen den Kippsegmenten (1,2,3) und einem um eine Drehachse drehbar gelagerten Rotorkörper (4) zu erzeugen, wobei Wälzkörper (6,7;20;24;44) zwischen dem Gehäusekörper (5) und den Kippsegmenten (1,2,3) angeordnet sind, **gekennzeichnet durch** einen Käfig (9), der dazu dient,
die Wälzkörper (6,7;20) zwischen dem Gehäusekörper (5) und den Kippsegmenten (1,2,3) in Position zu halten, wobei der Käfig (9) Durchgangslöcher (19;26;51-52) aufweist, in denen die Wälzkörper (6,7;20;24;44) mit Spiel so aufgenommen sind, dass die Wälzkörper (6,7;20;24;44) außerhalb der Durchgangslöcher (19;26;51-52) sowohl zu dem Gehäusekörper (5) als auch zu dem jeweiligen Kippsegment (1,2,3) Wälzkontakt haben.

2. Kippsegmentlager nach Anspruch 1, **dadurch gekennzeichnet, dass** die Wälzkörper (24;44) als Rollen ausgeführt sind.

3. Kippsegmentlager nach Anspruch 1, **dadurch gekennzeichnet, dass** die Wälzkörper (6,6;20) als Kugeln ausgeführt sind.

4. Kippsegmentlager nach einem der vorhergehenden Ansprüche, **dadurch gekennzeichnet, dass** der Käfig (9) mindestens einen einfachen Ringkörper (11,12;31,32;45) umfasst.

5. Kippsegmentlager nach einem der vorhergehenden Ansprüche, **dadurch gekennzeichnet, dass** den Kippsegmenten (1,2,3) jeweils ein Federelement (13,14,15;23;27;43) zugeordnet ist, um das zugeordnete Kippsegment (1,2,3) in dem Gehäusekörper (5) kippbar zu positionieren und zu halten.

6. Kippsegmentlager nach Anspruch 5, **dadurch gekennzeichnet, dass** das Federelement (13,14,15;23;27;43) das zugeordnete Kippsegment (1,2,3) an seinen in Umfangsrichtung entgegengesetzten Enden umgreift.

7. Kippsegmentlager nach Anspruch 5 oder 6, **dadurch gekennzeichnet, dass** das Federelement (23;43) mindestens eine nach innen gegen das zugeordnete Kippsegment (1) vorgespannte Federlasche (21;25) umfasst.

## Claims

1. Tilting pad bearing (10) comprising tilting pads (1, 2, 3), which are positioned and held so that they can tilt in a housing body (5) by means of a frame-type spring device (8) in order, during operation of the tilting pad bearing (10), to produce converging bearing gaps between the tilting pads (1, 2, 3) and a rotor body (4) mounted so as to be rotatable about an axis of rotation, wherein rolling elements (6, 7; 20; 24; 44) are arranged between the housing body (5) and the tilting pads (1, 2, 3), **characterized by** a cage (9) which serves to hold the rolling elements (6, 7; 20) in position between the housing body (5) and the tilting pads (1, 2, 3), wherein the cage (9) has through-holes (19; 26; 51-52) in which the rolling elements (6, 7; 20; 24; 44) are accommodated with play in such a way that the rolling elements (6, 7; 20; 24; 44) have rolling contact both with the housing body (5) and with the respective tilting pad (1, 2, 3) outside the through-holes (19; 26; 51-52).

2. Tilting pad bearing according to Claim 1, **characterized in that** the rolling elements (24; 44) are embodied as rollers.

3. Tilting pad bearing according to Claim 1, **characterized in that** the rolling elements (6, 6; 20) are embodied as balls.

4. Tilting pad bearing according to any of the preceding claims, **characterized in that** the cage (9) comprises at least one simple annular body (11, 12; 31, 32; 45).

5. Tilting pad bearing according to any of the preceding claims, **characterized in that** the tilting pads (1, 2, 3) are each assigned a spring element (13, 14, 15; 23; 27; 43) in order to position and hold the assigned tilting pad (1, 2, 3) so that it can tilt in the housing body (5).

6. Tilting pad bearing according to Claim 5, **characterized in that** the spring element (13, 14, 15; 23; 27; 43) fits around the assigned tilting pad (1, 2, 3) at its ends which are opposite in the circumferential direction.

7. Tilting pad bearing according to Claim 5 or 6, **characterized in that** the spring element (23; 43) comprises at least one spring tab (21; 25), which is biased inward against the assigned tilting pad (1).

## Revendications

1. Palier à segments basculants (10) avec des segments basculants (1, 2, 3) qui sont positionnés et maintenus de manière basculante dans un corps de boîtier (5) avec un dispositif élastique (8) en forme de cadre, afin de créer, lors du fonctionnement du palier à segments basculants (10), des interstices de palier convergents entre les segments basculants (1, 2, 3) et un corps de rotor (4) monté de manière rotative autour d'un axe de rotation, des corps de roulement (6, 7 ; 20 ; 24 ; 44) étant agencés entre le corps de boîtier (5) et les segments basculants (1, 2, 3), **caractérisé par** une cage (9) qui sert à maintenir en position les corps de roulement (6, 7 ; 20) entre le corps de boîtier (5) et les segments basculants (1, 2, 3), la cage (9) présentant des trous de passage (19 ; 26 ; 51-52) dans lesquels les corps de roulement (6, 7 ; 20 ; 24 ; 44) sont reçus avec jeu de telle sorte que les corps de roulement (6, 7 ; 20 ; 24 ; 44) ont un contact de roulement à l'extérieur des trous de passage (19 ; 26 ; 51-52) à la fois avec le corps de boîtier (5) et avec le segment basculant respectif (1, 2, 3).

2. Palier à segments basculants selon la revendication 1, **caractérisé en ce que** les corps de roulement (24 ; 44) sont réalisés sous forme de rouleaux.

3. Palier à segments basculants selon la revendication 1, **caractérisé en ce que** les corps de roulement (6, 6 ; 20) sont réalisés sous forme de billes.

4. Palier à segments basculants selon l'une quelconque des revendications précédentes, **caractérisé en ce que** la cage (9) comprend au moins un corps annulaire simple (11, 12 ; 31, 32 ; 45).

5. Palier à segments basculants selon l'une quelconque des revendications précédentes, **caractérisé en ce qu'**un élément élastique (13, 14, 15 ; 23 ; 27 ; 43) est associé à chacun des segments basculants (1, 2, 3) afin de positionner et de maintenir de manière basculante le segment basculant associé (1, 2, 3) dans le corps de boîtier (5).

6. Palier à segments basculants selon la revendication 5, **caractérisé en ce que** l'élément élastique (13, 14, 15 ; 23 ; 27 ; 43) entoure le segment basculant associé (1, 2, 3) à ses extrémités opposées dans la direction circonférentielle.

7. Palier à segments basculants selon la revendication 5 ou 6, **caractérisé en ce que** l'élément élastique (23 ; 43) comprend au moins une patte élastique (21 ; 25) précontrainte vers l'intérieur contre le segment basculant (1) associé.
